# FASCICULE DE BREVET EUROPEEN

(11) **EP 0 741 070 B1**
(45) Date de publication et mention de la délivrance du brevet: **15.09.1999**
(21) Numéro de dépôt: 96400953.4
(22) Date de dépôt: 03.05.1996
(51) Int. Cl.: B62D 33/04

(54) **Véhicule utilitaire comportant un toit mobile**
Nutzfahrzeug mit einem beweglichen Dach
Utility vehicle with a movable roof

(30) Priorité: 05.05.1995 FR 9505420
(43) Date de publication de la demande: 06.11.1996
(73) Titulaire: GENERAL TRAILERS FRANCE, 91042 Evry Cédex (FR)
(72) Inventeur: Franz, Carl, 42111 Wuppertal 1 (DE)
(74) Mandataire: Michelet, Alain

(56) Documents cités:
- EP-A- 0 047 022
- EP-A- 0 307 602
- FR-A- 2 390 308
- GB-A- 2 152 448

## Description

L'invention concerne un véhicule utilitaire comportant un bâti de couverture comprenant des montants corniers et des traverses longitudinales et transversales susceptibles d'être fixées aux extrémités supérieures des montants corniers, les traverses délimitant une couverture de toit reliée par une des traverses longitudinales à une paroi latérale rigide du véhicule. L'invention concerne également un profilé pour un tel véhicule.

Dans le cadre de la présente invention sont considérés comme véhicules utilitaires au même titre et sans condition de dimensions, des camions isolés, des remorques, ainsi que des semi-remorques ou véhicules déformables.

Le volume de chargement d'un véhicule utilitaire est fonction de la surface du plancher, ou plateau, de ce véhicule sur lequel des objets à transporter peuvent être déposés, et aussi de la position en hauteur et de l'encombrement d'un bâti de couverture monté sur ce plateau de véhicule. Le volume de chargement est ensuite fonction de la disposition des parois latérales et du toit du véhicule par rapport aux montants et traverses qui forment le bâti de couverture du véhicule. Le document EP-A-0.047.022 concerne un tel véhicule.

Alors que cette disposition ne pose pas de problème majeur lorsqu'une bâche forme les parois latérales et le toit, il n'en est pas de même lorsque les traverses longitudinales et transversales sont solidaires des montants corniers et que, ainsi, au moins le toit est monté en une position fixe par rapport au plateau du véhicule.

Au-delà du volume utile se pose la question de l'accès qui détermine l'utilisation effective de ce volume.

En effet, le montage fixe des traverses délimitant le toit sur les extrémités supérieures des montants corniers entraîne en général une réduction du volume effectif de chargement disponible, puisque la plupart des objets à transporter sont disposés sur des palettes et doivent donc passer avec leurs palettes par l'ouverture disponible entre une traverse et le plateau du véhicule.

Ce problème reste entier lorsque au moins une des parois latérales est constituée par une bâche montée coulissante dans au moins une des traverses. En effet, l'accès est encore limité par la présence des traverses longitudinales. Pour éviter ce problème, il faudrait prévoir des espaces de rangement de la bâche lorsqu'elle est ouverte pour pouvoir éventuellement enlever une partie de la traverse longitudinale correspondante et la remettre après chargement du véhicule. De telles manipulations prolongeraient désavantageusement la durée du chargement ou du déchargement d'un véhicule utilitaire et réduiraient donc sa rentabilité.

Il est concevable, pour pallier ces désavantages, de monter le toit pivotant autour d'un axe correspondant essentiellement à une des traverses longitudinales en fixant cette traverse au moyen d'axes de pivotement dans les montants corniers correspondants. Il est également concevable d'utiliser une charnière à axe de pivotement comme traverse longitudinale sur un côté du véhicule et de prévoir de l'autre côté du véhicule des supports sur lesquels le toit peut reposer et être immobilisé en dehors des périodes de chargement et de déchargement du véhicule.

Cependant, de telles dispositions sont désavantageuses dans la mesure où les traverses ainsi formées sont fortement exposées au risque de non étanchéité, de corrosion et de mauvais fonctionnement, pour ne citer que quelques désavantages typiques de liaisons déformables.

Ainsi, le but de l'invention est de proposer un véhicule dont le bâti de couverture est formé de façon à permettre d'accéder à l'intérieur du volume de chargement avec des charges, par exemple préalablement conditionnées sur des palettes, et d'assurer à la fois le respect des dimensions maximales imposées aux constructeurs de véhicules utilitaires pour de tels véhicules en état de marche et une exploitation maximale du volume de chargement d'un tel véhicule, notamment de sa hauteur, tout en permettant un chargement et un déchargement exempt de toute contrainte.

Le but de l'invention est atteint, dans un véhicule utilitaire comportant un bâti de couverture comprenant des montants corniers, des traverses longitudinales et transversales susceptibles d'être fixées aux extrémités supérieures des montants corniers et formant un support pour une couverture de toit, les traverses longitudinales et transversales délimitant une couverture de toit du véhicule reliée par l'une des traverses à une paroi latérale rigide du véhicule, en ce que la traverse reliant la couverture de toit à la paroi latérale rigide du véhicule forme une jonction déformable permettant, par déformation élastique, une remontée de la traverse opposée d'une hauteur au moins égale à son encombrement, de façon à permettre un accès sans contrainte, sur le plateau, à une charge ayant une hauteur égale à la distance du plateau de chargement à la couverture de toit.

Cette disposition met particulièrement en oeuvre l'élasticité du matériau choisi pour la réalisation de la traverse formant la jonction déformable. Ainsi, il convient de rappeler que l'élasticité est la propriété d'un corps ou d'un matériau de reprendre complètement sa forme initiale quand la force qui l'a déformé cesse d'agir. Cette déformation doit être inférieure à une valeur limite. Si, par contre, cette limite était dépassée, la déformation serait, au moins partiellement, permanente et irréversible.

De plus, ne pas dépasser la limite d'élasticité d'un matériau ou d'un corps est la condition nécessaire à la possibilité de mettre ce corps ou ce matériau en contrainte pour y engendrer une force de rappel.

L'invention concerne également les caractéristiques ci-après considérées isolément ou selon toutes leurs combinaisons techniquement possibles.

La traverse reliant la couverture de toit à la paroi latérale rigide et formant une jonction déformable présente une section transversale essentiellement en forme d'un L, et comprend une première aile rigide destinée à être attachée à la paroi latérale rigide, une seconde aile rigide destinée à être attachée à la couverture de toit, et une zone élastiquement déformable reliant les première et seconde ailes rigides l'une à l'autre. Cette disposition permet de définir sur le profilé une zone de déformation élastique dans laquelle se concentre la quasi-totalité de la contrainte exercée sur le profilé lors du changement de position du toit entre sa position ouverte et sa position fermée.

La première et la seconde ailes du profilé comportent des parois doubles espacées permettant un attachement du profilé respectivement à la paroi latérale rigide et à la couverture de toit par pincement. Cette disposition permet une meilleure fixation de l'une et l'autre des deux pièces à relier par le profilé, qu'un montage d'un profilé ayant des ailes à paroi simple, destinées à être fixées sur la face extérieure du toit et de la paroi latérale, ne pourrait donner.

La traverse élastiquement déformable présente, au moins sur une partie de sa longueur, une forme convexe, vu de l'extérieur du véhicule.

La traverse élastiquement déformable présente, au moins sur une partie de sa longueur, une forme concave, vu de l'extérieur du véhicule.

La traverse reliant la couverture de toit à la paroi latérale rigide est un profilé en aluminium extrudé.

La traverse reliant la couverture de toit à la paroi latérale rigide est un profilé en matière synthétique.

Le bâti de couverture comprend au moins un rancher monté mobile dans un premier guidage de la traverse susceptible d'être remontée, cette traverse comportant un second guidage destiné à recevoir, également sous forme d'un montage mobile, des coulisseaux d'une bâche constituant une paroi latérale flexible du véhicule, le premier guidage étant disposé au-dessus et à une distance verticale du second guidage, ce premier et ce second guidage se recouvrant transversalement au moins partiellement.

Cette disposition complète avantageusement la conception du toit selon l'invention. Alors que le fait de pouvoir remonter le toit rend possible une exploitation complète de la hauteur de l'espace de chargement d'un véhicule utilitaire, le montage mobile des ranchers et d'une bâche dans un profil moins large que jusqu'à maintenant, tel qu'il est défini ci-avant permet d'exploiter également entièrement la largeur de l'espace de chargement d'un véhicule utilitaire.

Le premier guidage a une hauteur suffisante pour permettre à l'extrémité supérieure du rancher de prendre aussi bien une position inférieure lors du déplacement du rancher qu'une position supérieure lorsque le rancher est immobilisé.

Le but de l'invention est également atteint par un profilé pour un bâti de couverture d'un véhicule utilitaire, présentant une section transversale essentiellement en forme d'un L.

Conformément à l'invention, ce profilé comprend une première aile rigide destinée à être attachée à la paroi latérale rigide du véhicule utilitaire, une seconde aile rigide destinée à être attachée à la couverture de toit du véhicule, et une zone élastiquement déformable reliant les première et seconde ailes rigides l'une à l'autre.

D'autres caractéristiques et avantages de l'invention ressortiront à la lecture de la description d'un mode de réalisation avantageux faite en référence aux dessins. Dans ces dessins, les Figures montrent:
Figure 1 une vue en perspective d'un véhicule utilitaire selon l'invention.
Figure 2 une vue arrière du véhicule de la Figure 1.
Figure 3 une coupe transversale d'un profilé selon l'invention.

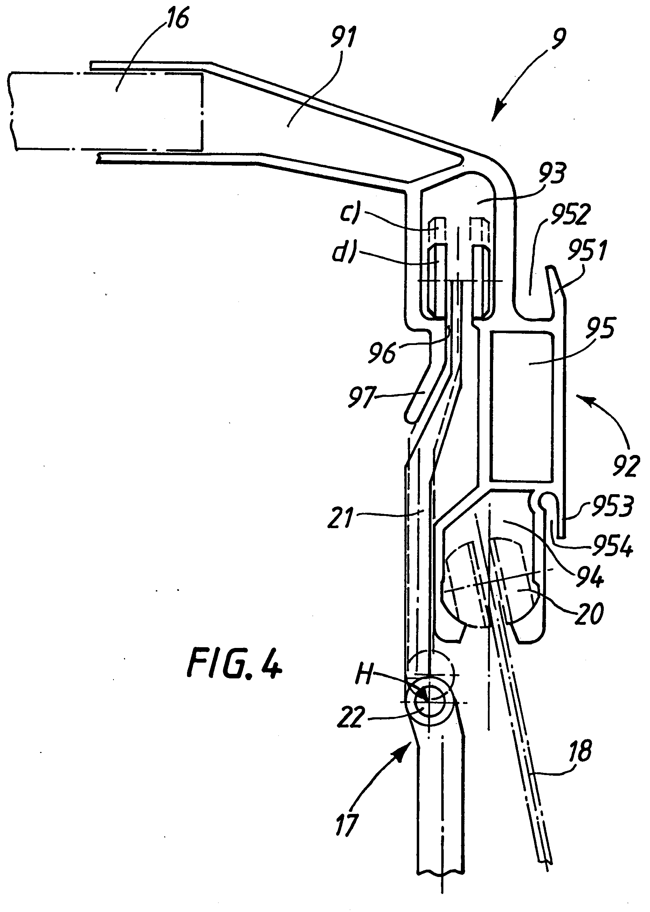

Figure 4 une coupe transversale d'une traverse ayant deux guidages.

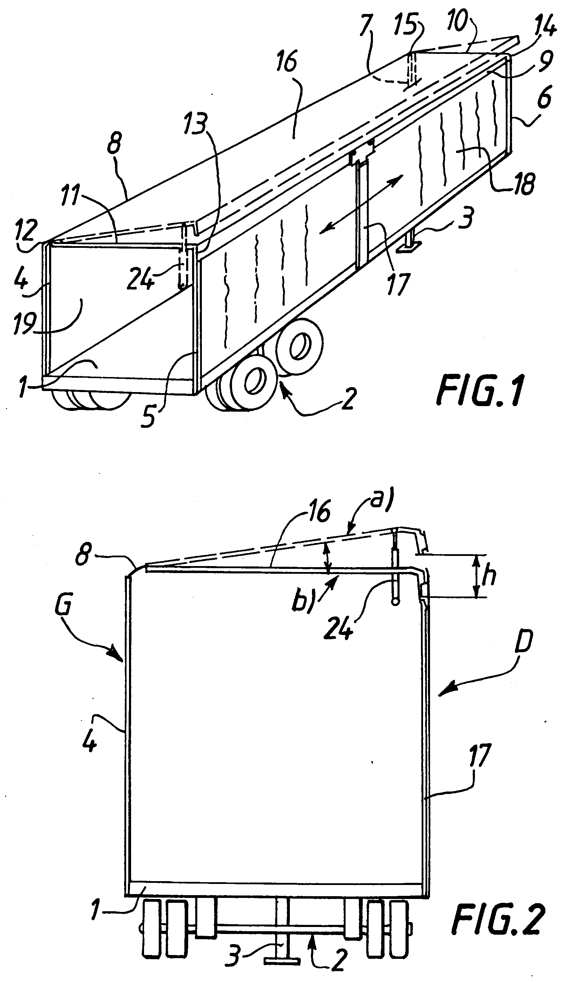

Le véhicule utilitaire représenté sur la Figure 1 est une semi-remorque comprenant un plateau 1, muni d'un essieu double 2 et d'une béquille 3, un bâti de couverture comprenant des montants corniers 4, 5, 6, 7 disposés aux quatre coins du plateau 1, des traverses longitudinales 8, 9 et des traverses transversales 10, 11. Les traverses 8 à 11 sont attachées aux extrémités supérieures 12 à 15 des montants corniers 4 à 7 et forment un support pour une couverture de toit 16.

Le bâti de couverture du véhicule utilitaire de l'invention comprend par ailleurs un rancher 17 monté mobile dans la traverse longitudinale 9 d'un premier côté D du véhicule, le côté droit, vu dans le sens de la marche avant du véhicule.

Le premier côté D du véhicule est fermé par une paroi flexible constituée par une bâche 18 montée coulissante dans la traverse longitudinale 9.

De plus, le véhicule utilitaire est muni de trois autres parois latérales. Ce sont des parois rigides, dont la Figure 1 ne montre que la paroi 19 disposée sur un deuxième côté G du véhicule, le côté gauche du véhicule, vu dans le sens de la marche avant. La paroi 19 s'étend ainsi à partir du plateau 1 dans un plan sensiblement parallèle à celui défini par les montants corniers 4 et 7 et la traverse longitudinale 8.

Dans ce qui suit, l'invention est décrite en référence au mode de réalisation particulier d'un véhicule utilitaire fermé par une bâche sur le seul côté droit. Toutefois, il est également concevable, sans sortir de la présente invention, que cette bâche soit située sur le côté gauche ou sur les faces avant ou arrière du véhicule ou à la fois sur deux ou plusieurs côtés du véhicule.

Dans le même désir de simplifier la description, le véhicule utilitaire est représenté comme étant muni d'un seul rancher mobile. Il va de soi, que le véhicule peut être muni de plusieurs ranchers dont le nombre dépend des données de construction d'une réalisation particulière d'un tel véhicule.

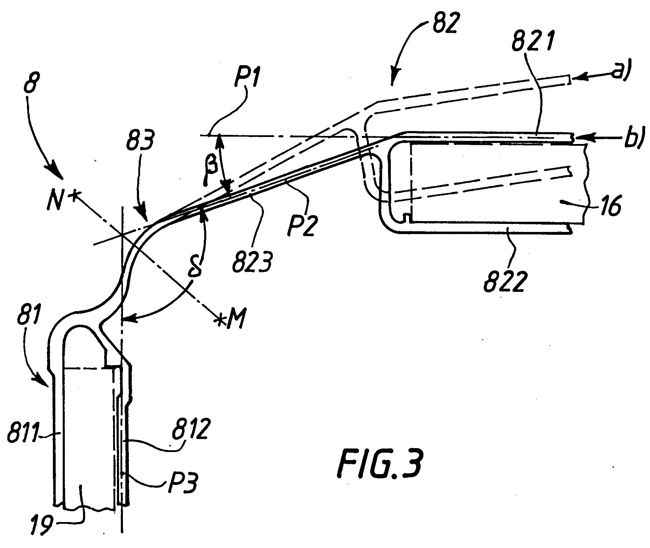

La traverse longitudinale 8 est constituée par un profilé formant une jonction déformable, et qui est fabriquée de préférence soit en aluminium extrudé, soit en matière synthétique, renforcée de fibres. Ce profilé déformable 8 est formé de manière telle qu'il permette, par déformation élastique, une variation angulaire limitée de sa section cornière. Grâce à cette caractéristique, décrite plus loin en plus de détails, le toit 16 peut prendre principalement deux positions. La première position, référencée a) sur les Figures 2 et 3, est la position d'ouverture du toit. Elle correspond à une position de repos, c'est-à-dire sans contrainte élastique, du profilé 8.

La deuxième position, référencée b) sur les Figures 2 et 3, est la position de fermeture du toit. Elle correspond à une position de contrainte du profilé 8.

En variante, il est également concevable que le profilé 8 soit formé de façon que sa position de repos corresponde à une position intermédiaire entre les positions d'ouverture a) et de fermeture b). Dans ce cas, il faut appliquer une contrainte aussi bien pour obtenir la pleine ouverture du toit 16 que pour obtenir sa fermeture complète.

L'ouverture et la fermeture du toit 16 sont effectuées au moyen d'un dispositif de fermeture 24, qui peut être constitué par exemple par une paire de vérins hydrauliques 24.

Le profilé 8 présente une section transversale essentiellement en forme d'un L, correspondant à la forme rectangulaire des crêtes d'un espace de chargement essentiellement parallélipipédique. Le profilé 8 comprend une première aile rigide 81 à paroi double espacée, une seconde aile rigide 82 formée sur la longueur entière du profilé et sur une partie de sa largeur, avec une paroi double espacée, et une zone 83 élastiquement déformable reliant les première et seconde ailes 81, 82. La conception de parois doubles espacées permet de monter le profilé 8 aussi bien sur la paroi latérale rigide 19 que sur un panneau rigide formant le toit 16 par pincement. Plus particulièrement, les parois 811 et 812 de la première aile 81 enferment le bord de la paroi latérale 19 après avoir inséré celle-ci dans cette aile du profilé 8. De manière correspondante, les parois 821 et 822 de la seconde aile 82 enferment le bord d'un panneau rigide formant le toit 16 du véhicule lorsque ce panneau 16 est inséré dans la seconde aile 82 du profilé 8.

La fixation des première et seconde ailes sur les bords de la paroi rigide 19 et du toit 16 peut être effectuée par tout moyen, par exemple par rivetage, pour assurer que les parois des ailes 81 et 82 soient bien appliquées sur les deux côtés de chacune des parois latérales 19 et 316 et pour garantir ainsi une jonction stable et étanche.

La paroi extérieure 821 de la deuxième aile 82 est prolongée vers la première aile 81 par une paroi unique 823 formant un angle aigu β avec un plan P1 dans lequel s'étend la paroi extérieure 821. L'angle β est déterminé en partie de façon à tenir compte de données générales de conception telles que la forme du toit ou les dimensions du bâti de couverture. Mais l'angle β est également déterminé de façon à prendre en compte l'élasticité de la traverse déformable et la hauteur h par laquelle la traverse parallèle à la traverse déformable doit être remontée.

En effet, l'invention est décrite en référence au mode de réalisation particulier d'un véhicule utilitaire ayant une paroi latérale rigide formant le côté gauche du véhicule, vu dans le sens de la marche avant de ce dernier, et une paroi flexible formant le côté droit du véhicule, ainsi qu'un toit susceptible d'être remonté par un mouvement qui est approximativement un pivotement autour d'un axe à la traverse longitudinale gauche du bâti de couverture du véhicule.

Cependant, il est aussi bien concevable, sans sortir de la présente invention, que cette disposition soit modifiée de manière que cet axe soit parallèle à la traverse longitudinale droite ou à une des traverses transversales avant ou arrière ou encore parallèle à une traverse transversale intermédiaire, permettant la réalisation d'un véhicule ayant un toit susceptible d'être remonté partiellement. Cette dernière variante verrait la traverse intermédiaire formant une jonction déformable, relier deux parties adjacentes du toit du véhicule de façon analogue à la jonction déformable décrite plus haut.

Selon le mode de réalisation particulier décrit en référence à la Figure 3, la paroi 823 est reliée à la première aile 81 par l'intermédiaire de la zone 83 qui est élastiquement déformable et dont la forme correspond approximativement à une portion de la surface latérale d'un cylindre qui se développe autour d'un axe M situé à l'intérieur d'un angle _ défini entre un plan P2 dans lequel s'étend la paroi 823 et un plan P3 dans lequel s'étend la paroi 812 de la première aile 81.

En variante de cette réalisation représentée sur la Figure 3, la zone élastiquement déformable 83 du profilé 8 pourrait aussi bien être constituée par une paroi dont la forme correspond à une portion de la surface latérale d'un cylindre qui se développe autour d'un axe N situé à l'extérieur de l'angle _ défini plus haut. Dans cette variante, la zone 83 n'aurait donc pas la forme convexe représentée sur la Figure 3, mais une forme concave vue de l'extérieur du véhicule.

L'élasticité de la zone 83 du profilé 8 est choisie de façon que l'angle d'ouverture Â du toit 16 soit de l'ordre de 9°, ce qui correspond à une remontée de la traverse 9 de l'ordre de 40 cm pour une semi-remorque dont le volume de chargement a une largeur de l'ordre de 2,55 m.

En complément des dispositions de la présente invention, la traverse longitudinale 9 peut être formée de façon à recevoir à la fois le rancher mobile 17 et les coulisseaux 20 de la bâche 18 dans des guidages disposés de manière particulièrement avantageuse.

La traverse longitudinale 9 est constituée par un profilé en aluminium extrudé ayant la forme d'une cornière présentant une première aile 91 et une deuxième aile 92, approximativement perpendiculaire à la première aile 91. La première aile 91 est formée avec une double paroi afin de pouvoir y recevoir par pincement un bord du toit 16.

La deuxième aile 92 s'étend dans un plan sensiblement vertical lorsque le profilé 9 est mis en place et attaché aux extrémités supérieures 13 et 14 des montants corniers 5 et 6.

L'aile 92 comprend deux espaces creux 93, 94 qui s'étendent en direction longitudinale du profilé 9 et qui constituent respectivement un premier guidage destiné à recevoir le rancher 17 et un second guidage destiné à recevoir les coulisseaux 20 de la bâche 18.

Le premier guidage 93 est disposé au-dessus et à une distance verticale du second guidage 94 de telle façon que les deux guidages 93, 94 se recouvrent transversalement, au moins partiellement.

La seconde aile 92 du profilé 9 comprend par ailleurs une partie 95 qui présente un troisième espace creux et est interposée entre les deux guidages 93, 94 et apporte à cette aile la stabilité nécessaire. Avantageusement, la partie 95 est munie d'une bordure 951 délimitant une gouttière 952 et d'un rebord 953 définissant avec le second guidage 94 une rainure 954 destinée à recevoir un joint d'étanchéité couvrant la partie supérieure de la bâche 18.

Le premier guidage 93 a une section transversale approximativement rectangulaire et présente, dans la paroi inférieure, une fente 96 donnant accès à l'intérieur du premier guidage 93. D'un côté de la fente 96, le premier guidage 93 est muni d'une lèvre de guidage 97. De l'autre côté de la fente 96, le guidage 93 est solidaire de la partie 95 enfermant le troisième espace creux du profilé 9.

Le premier guidage 93 a une hauteur suffisante pour permettre à un chariot à galets 21 formant l'extrémité supérieure du rancher 17 de prendre une position supérieure c) représentée sur la Figure 3 en pointillés lorsque le rancher 17 est immobilisé et de prendre une position inférieure d) lors du déplacement du rancher 17.

Le chariot à galet 21 est relié à la partie principale du rancher 17 par une articulation 22 dont l'axe H est disposé essentiellement horizontalement lorsque le rancher 17 est mis en position. La conception déformable de l'extrémité supérieure du rancher 17 apporte une plus grande liberté à la manipulation du rancher 17 lors de son déplacement et de sa mise en place. En effet, de tels ranchers sont très longs et très lourds, ce qui entraîne un certain débattement lors de leur manipulation, compte-tenu de la hauteur des véhicules utilitaires et donc des traverses longitudinales par rapport à la taille de l'homme qui manipule.

En variante des dispositions de la présente invention, selon lesquelles le toit 16 est être fixé de manière permanente, avec la traverse longitudinale 8, aux montants corniers 4 et 7 et attachés amoviblement, par la traverse longitudinale 9, aux montants corniers 5 et 6 du côté droit du véhicule, la fixation du toit 16 du côté droit du véhicule, peut être obtenue par des dispositifs de fermeture 24, tels que des vérins hydrauliques disposés sur les parois avant et arrière du véhicule et sur les traverses transversales 10 et 11 du toit 16.

## Revendications

1. Véhicule utilitaire comportant un bâti de couverture comprenant des montants corniers (4 à 7) et des traverses longitudinales (8, 9) et transversales (10, 11) susceptibles d'être fixées aux extrémités supérieures (12 à 15) des montants corniers (4 à 7), les traverses longitudinales (8, 9) et transversales (10, 11) délimitant une couverture de toit (16) du véhicule reliée par l'une (8) des traverses à une paroi latérale rigide (19) du véhicule, caractérisé en ce que la traverse (8) reliant la couverture de toit (16) à la paroi latérale rigide (19) du véhicule forme une jonction déformable permettant, par déformation élastique, une remontée de la traverse (9) d'une hauteur h au moins égale à son encombrement, de façon à permettre un accès sans contrainte sur le plateau à une charge ayant une hauteur égale à la distance du plateau de chargement (1) à la couverture de toit (16).

2. Véhicule selon la revendication 1, caractérisé en ce que la traverse (8) formant une jonction déformable présente une section transversale essentiellement en forme d'un L, comprenant une première aile rigide (81) destinée à être attachée à la paroi latérale rigide (19), une seconde aile rigide (82) destinée à être attachée à la couverture de toit (16), et une zone (83) élastiquement déformable reliant les première et seconde ailes rigides (81, 82).

3. Véhicule selon la revendication 2, caractérisé en ce que la première (81) et la seconde (82) ailes du profilé (8) comportent des parois doubles espacées (811, 812, 821, 822) permettant l'attachement du profilé (8) respectivement à la paroi latérale rigide (19) et à la couverture de toit (16) par pincement.

4. Véhicule selon l'une quelconque des revendications 1 à 3, caractérisé en ce que la traverse (8) élastiquement déformable présente, au moins sur une partie de sa longueur, une forme convexe, vu de l'extérieur du véhicule.

5. Véhicule selon l'une des revendications 1 à 3, caractérisé en ce que la traverse (8) élastiquement déformable présente, au moins sur une partie de sa longueur, une forme concave, vu de l'extérieur du véhicule.

6. Véhicule selon l'une quelconque des revendications 1 à 5, caractérisé en ce que la traverse (8) reliant la couverture de toit (16) à la paroi latérale rigide (19) est un profilé en aluminium extrudé.

7. Véhicule selon l'une quelconque des revendications 1 à 5, caractérisé en ce que la traverse (8) reliant la couverture de toit (16) à la paroi latérale rigide (18) est un profilé en matière synthétique.

8. Véhicule selon l'une quelconque des revendications 1 à 7, caractérisé en ce que le bâti de couverture comprend au moins un rancher (17) monté mobile dans un premier guidage (93) de la traverse (9) susceptible d'être remontée, cette traverse (9) comportant un second guidage (94) destiné à recevoir, également sous forme d'un montage mobile, des coulisseaux (20) d'une bâche (18) constituant une paroi latérale flexible (D) du véhicule, le premier guidage (93) étant disposé au-dessus et à une distance verticale du second guidage (94), ce premier et ce second guidages se recouvrant transversalement au moins partiellement.

9. Véhicule selon la revendication 8, caractérisé en ce que le premier guidage (93) a une hauteur suffisante pour permettre à l'extrémité supérieure (21) du rancher (17) de prendre aussi bien une position inférieure (b) lors du déplacement du rancher (17) qu'une position supérieure (a) lorsque le rancher (17) est immobilisé.

10. Profilé pour un bâti de couverture d'un véhicule utilitaire présentant une section transversale essentiellement en forme d'un L, caractérisé en ce qu'il comprend une première aile rigide (81) destinée à être attachée à la paroi latérale rigide (19), une seconde aile rigide (82) destinée à être attachée à la couverture de toit (16), et une zone (83) élastiquement déformable reliant les première et seconde ailes rigides (81, 82).

## Claims

1. Utility vehicle including a covering framework comprising corner posts (4 to 7), longitudinal members (8, 9) and transverse members (10, 11) which can be fixed to the upper ends (12 to 15) of the corner posts (4 to 7), the longitudinal members (8, 9) and transverse members (10, 11) delimiting a roof covering (16) for the vehicle, which covering is connected by one (8) of the members to a rigid side wall (19) of the vehicle, characterized in that the member (8) connecting the roof covering (16) to the rigid side wall (19) of the vehicle forms a deformable joint which, by elastic deformation, allows the member (9) to be raised by a height (h) at least equal to its size, so as to allow unhindered access to the platform for a load which has a height equal to the distance between the loading platform (1) and the roof covering (16).

2. Vehicle according to Claim 1, characterized in that the member (8) forming a deformable joint has an essentially L-shaped transverse section comprising a first rigid flange (81) intended to be attached to the rigid side wall (19), a second rigid flange (82) intended to be attached to the roof covering (16), and an elastically deformable region (83) connecting the first and second rigid flanges (81, 82).

3. Vehicle according to Claim 2, characterized in that the first (81) and the second (82) flanges of the section (8) include spaced-apart double walls (811, 812, 821, 822) allowing the section (8) to be attached respectively to the rigid side wall (9) and to the roof covering (16) by pinching.

4. Vehicle according to any one of Claims 1 to 3, characterized in that the elastically deformable member (8) has a convex shape over at least part of its length when viewed from the outside of the vehicle.

5. Vehicle according to one of Claims 1 to 3, characterized in that the elastically deformable member (8) over at least part of its length has a concave shape when viewed from the outside of the vehicle.

6. Vehicle according to any one of Claims 1 to 5, characterized in that the member (8) connecting the roof covering (16) to the rigid side wall (19) is an extruded aluminium section.

7. Vehicle according to any one of Claims 1 to 5, characterized in that the member (8) connecting the roof covering (16) to the rigid side wall (18) is a synthetic section.

8. Vehicle according to any one of Claims 1 to 7, characterized in that the covering framework comprises at least one stanchion (17) mounted so that it can move in a first guide (93) of the member (9) capable of being raised, this member (9) including a second guide (94) intended to accommodate, also mounted so that it can move, runners (20) of a tarpaulin (18) constituting a flexible side wall (D) of the vehicle, the first guide (93) being arranged above and some vertical distance from the second guide (94), this first and this second guide overlapping transversely at least in part.

9. Vehicle according to Claim 8, characterized in that the first guide (93) is high enough to allow the upper end (21) of the stanchion (17) to adopt either a lower position (b) while the stanchion (17) is being shifted, or an upper position (a) when the stanchion (17) is immobilized.

10. Section for a covering framework of a utility vehicle having an essentially L-shaped transverse section, characterized in that it comprises a first rigid flange (81) intended to be attached to the rigid side wall (19), a second rigid flange (82) intended to be attached to the roof covering (16), and an elastically deformable region (83) connecting the first and second rigid flanges (81, 82).

## Patentansprüche

1. Nutzfahrzeug, bestehend aus einem Abdeckgehäuse mit Eckstützen (4 - 7) und Längsstreben (8, 9) und Querstreben (10, 11), die an den oberen Enden (12 - 15) der Eckstützen (4 - 7) befestigt werden können, wobei die Längsstreben (8, 9) und die Querstreben (10, 11) eine Dachabdeckung (16) des Fahrzeugs begrenzen, die mit einer (8) der Streben mit einer starten Seitenwand (19) des Fahrzeugs verbunden ist, dadurch gekennzeichnet, daß die Strebe (8), die die Dachabdeckung (16) mit der starten Seitenwand (19) des Fahrzeugs verbindet, eine verformbare Verbindung bildet, die durch elastische Verformung ein Anheben der Strebe (9) um eine Höhe (h) wenigstens gleich ihrem Platzbedarf ermöglicht, um einen ungehinderten Zugang zu einer Ladung auf der Ladefläche zu erlauben, die eine Höhe gleich dem Abstand der Ladefläche (1) von der Dachabdeckung (16) hat.

2. Fahrzeug nach Anspruch 1, dadurch gekennzeichnet, daß die Strebe (8), die eine verformbare Verbindung bildet, einen im wesentlichen L-förmigen Querschnitt hat, der einen ersten starten Schenkel (81), der zur Befestigung an der starten Seitenwand (19) bestimmt ist, einen zweiten starten Schenkel (82), der zur Befestigung an der Dachabdeckung (16) bestimmt ist, und einen elastisch verformbaren Bereich (83), der den ersten und zweiten starten Schenkel (81, 82) verbindet aufweist.

3. Fahrzeug nach Anspruch 2, dadurch gekennzeichnet, daß der erste (81) und der zweite (82) Schenkel des Profilteils (8) beabstandete doppelte Wände (811, 812, 821, 822) aufweist, die die Befestigung des Profilteils (8) durch Quetschen an der starten Seitenwand (19) bzw. der Dachabdeckung (16) ermöglichen.

4. Fahrzeug nach einem der Ansprüche 1 - 3, dadurch gekennzeichnet, daß die elastisch verformbare Strebe (8) wenigstens auf einem Teil ihrer Länge eine von außerhalb des Fahrzeugs gesehen konvexe Form hat.

5. Fahrzeug nach einem der Ansprüche 1 - 3, dadurch gekennzeichnet, daß die elastisch verformbare Strebe (8) wenigstens auf einem Teil ihrer Länge eine von außerhalb des Fahrzeugs gesehen konkave Form hat.

6. Fahrzeug nach einem der Ansprüche 1 - 5, dadurch gekennzeichnet, daß die die Dachabdeckung (16) mit der starten Seitenwand (19) verbindende Strebe (8) ein Profilteil aus extrudiertem Aluminium ist.

7. Fahrzeug nach einem der Ansprüche 1 - 5, dadurch gekennzeichnet, daß die Traverse (8), die die Dachabdeckung (16) mit der starten Seitenwand (18) verbindet, ein Profilteil aus synthetischem Material ist.

8. Fahrzeug nach einem der Ansprüche 1 - 7, dadurch gekennzeichnet, daß das Abdeckgehäuse wenigstens eine Stütze (17) aufweist, die in einer ersten Führung (93) der anhebbaren Strebe (9) verschiebbar gelagert ist, wobei diese Strebe (9) eine zweite Führung (94) aufweist, die dazu bestimmt ist, ebenfalls verschiebbar Kulissen (20) einer Plane (18) aufzunehmen, die eine flexible Seitenwand (D) des Fahrzeugs bildet, wobei die erste Führung (93) oberhalb und vertikal beabstandet zu der zweiten Führung (94) angeordnet ist, und wobei sich die erste und die zweite Führung in Querrichtung wenigstens teilweise überdecken.

9. Fahrzeug nach Anspruch 8, dadurch gekennzeichnet, daß die erste Führung (93) eine Höhe hat, die ausreicht, damit das obere Ende (21) der Stütze (17) sowohl eine untere Position (b) bei der Verstellung der Stütze (17) als auch eine obere (a) einnehmen kann, wenn die Stütze (17) arretiert ist.

10. Profilteil für ein Abdeckgehäuse eines Nutzfahrzeugs mit einem im wesentlichen L-förmigen Querschnitt, dadurch gekennzeichnet, daß es einen ersten starten Schenkel (81), der dazu bestimmt ist, an der starten Seitenwand (19) befestigt zu werden, einen zweiten starten Schenkel (82), der dazu bestimmt ist, an der Dachabdeckung (16) befestigt zu werden, und einen elastisch verformbaren Bereich (83), der den ersten und den zweiten starten Schenkel (81, 82) verbindet aufweist.
